# EUROPEAN PATENT APPLICATION

(11) **EP 2 747 370 A1**
(43) Date of publication of application: **25.06.2014**
(21) Application number: 12306656.5
(22) Date of filing: 21.12.2012
(51) Int. Cl.: H04L 29/06

(54) **Method and apparatus for providing secure access to a network**

(71) Applicant: Gemalto SA, 92190 Meudon (FR)
(72) Inventor: Büchner, Matthias, Wolfgang, 92190 Meudon (FR); Castillo, Laurent, 92190 Meudon (FR); Amiel, Patrice, 92190 Meudon (FR)
(74) Representative: Afdili, Ilham

(57) **Abstract**

Method and device for enabling network conductivity based on configuration parameter transmitted over a short-range pairing protocol. A networking configuration parameter is transmitted over the short-range pairing protocol. A networking configuration is set up based on the parameter and used to establish a connection on a second communications protocol. Other systems and methods are disclosed.

## Description

### BACKGROUND OF THE INVENTION

The present invention relates generally to computer networking, and more particularly to procurement of configuration parameters for establishing a connection.

Being connected to a computer network is often highly desirable, yet accomplishing the connection is often a difficult and tedious task. When taking a network enabled device to a new location, a user may want to avail himself to an available network. For example, a user may have a smartphone or notebook computer that is easily moved from location-to-location. Yet when at a new location, the user may see that a network is available, but stymied in his use of the network by firewalls, passwords, etc.

It is also desirable to easily connect new devices to a home network. More-and-more devices, e.g., appliances, are highly computerized and contain enough computing capability to easily perform network communications. Consider, for example, smart thermostats, such as the ecobee Smart Thermostat (http://www.ecobee.com/solutions/home/smart/. The ecobee Smart Thermostat contains a web portal allowing the owner to access the thermostat to obtain reports on the owner's HVAC system and allowing the owner to change thermostat settings. The web portal may be accessed from any Internet connection. Similar portals may be made available to other appliances and devices.

However, to take advantage of such functionality, the appliances must be programmed to allow for connection to the home network and the network gateway may need to be programmed to allow the appliance to reside on the network. Such connections can be less than trivial and often network security is ignored.

Many energy companies have started deploying Internet Protocol (IP) enabled smart meters that are able to report consumption levels and even sometimes control home appliances like AC and heaters. However, when these meters are deployed with no IP security, the meters become a vulnerability in network security in the local area network to which they are connected. That vulnerability is one of several reasons wide-spread smart meter deployment has been criticized.

A USB device also called "Wimbi" of Gemalto S.A., Meudon, France, is a device that improves the connectability of certain non-IP enabled USB devices. A typical usage connects a photo camera to an upload server when the device is powered up. Then this server can publish this data (photos and videos) on other servers on the Internet, e.g., Picasa, Facebook, Twitter. Another usage connects a photo frame to a picture server, e.g., Picasa, Facebook, Twitter, making it possible to push to the photo frame display photos on those servers.

Yet another example of providing network connectivity to a non-traditional network device is the Eye-Fi memory card of Eye-Fi, Inc., Mountain View, California. The Eye-Fi card allows for photographs to be transferred to Internet services such as Facebook, Picasa, and Flickr over a WiFi connection.

eGo of Gemalto, S.A., is yet another example of a technology that brings network connectivity to various home appliances. The eGo device uses a skin-communication interface to pair a Bluetooth connection between the eGo device and an eGo receiver that may be embedded in various home appliances, such as doors, switches, TVs, and telephones. The Bluetooth connection is used to control and personalize the home appliance to the preferences of the user that touches the device.

While the aforementioned technologies provide mechanisms for connecting appliances of various sorts, including smart meters, memory cards, photo frames, doors, switches, and thermostats, to a network, their focus is on how to connect a device to a server or how to connect two devices to one another. It is highly important that such connections are secure and that establishing connections to the network can be accomplished without excessive difficulty to the user.

From the foregoing it is apparent that there is still a need for an improved method to provide an improved technology for providing secure and flexible network connectivity that may be deployed to a variety of devices and network infrastructures.

Thereto, the present invention proposes a method for establishing a communications channel between a network-enabled device and a network gateway device, characterized in that the method comprises establishing a first communications channel between the network-enabled device and the network gateway device over a short-range pairing protocol; operating the gateway device to transmit a network configuration parameter from the gateway device to the network-enabled device on the first communications channel, wherein the network configuration parameter is a connection parameter required for connecting to the gateway over a second communications protocol; operating the network-enabled device to setup a network configuration based on the received network configuration parameter; and to use the network configuration to establish a second communications channel over the second communications protocol.

According to another aspect of the invention, the short-range pairing protocol may be a body-coupling communications protocol and the step of establishing a first communications channel may comprise recognizing that a user simultaneously touches the network-enabled device and the gateway device or a proxy for the gateway device.

According to another aspect of the invention, the short-range pairing protocol may be near-field communication and the step of establishing a first communications channel may comprise detecting that a user carrying the network-enabled device has approached the gateway device or a proxy for the gateway device.

According to another aspect of the invention, the short-range pairing protocol may be over an optical link and the step of establishing a first communications channel comprises detecting that a user carrying the network-enabled device is transmitting optical signals on an optical wavelength commensurate with an optical wavelength the gateway device or a proxy for the gateway device supports for data communication.

According to another aspect of the invention, the optical link may be over an Infrared (IR) communications channel.

According to another aspect of the invention, the method may further comprise upon successfully establishing the first communications channel transmitting - from the network-enabled device to the network gateway device on the first communications channel - a parameter of the network-enabled device required by the network gateway device to establish the network-enabled device as eligible for communication with the gateway device on a second communications protocol; and operating the gateway device to receive the parameter of the network-enabled device on the first communications channel, and to use the parameter to register the network-enabled device for communication to the network via the gateway device.

According to another aspect of the invention, the parameter may be an identifier of the network-enabled device.

According to another aspect of the invention, the identifier may be a MAC address and the gateway device may be operated to perform MAC filtering based on the MAC address received over the first communications channel.

According to another aspect of the invention, establishing of a communications channel may comprise authenticating a user on the network-enabled device as a user that is authorized to use the first communications channel to establish a second communications channel over the second communications protocol.

According to another aspect of the invention, the authentication may be performed by requiring the user to enter a PIN, a password, or entering a prescribed pattern on a touchscreen.

According to another aspect of the invention, the network-enabled device may comprise a biometric sensor and the authentication may comprise verifying the identity of an authorized user of the network-enabled device based on a reading of biometric data on the biometric sensor.

According to another aspect of the invention, the network-enabled device may comprise a camera and the step of authenticating the user may comprise verifying the identity of an authorized user of the network-enabled device based on face recognition, or wherein the network-enabled device may comprise a voice detector and the step of authenticating the user may comprise recognizing a voice print of the user.

According to another aspect of the invention, the network-enabled device identifying information may be selected from the set MAC address of the network-enabled device, a public key of the network-enabled device, a secret of the network-enabled device usable as a shared secret key with the gateway device, a private key and a digital certificate of the network-enabled device confirming the identity of the network-enabled device.

According to another aspect of the invention, the step of transmitting the network-enabled device identifying information may comprise digitally signing the message containing the network-enabled-device identifying information with a digital certificate associated with the network-enabled device or encrypting the message containing the network-enabled-device identifying information.

According to another aspect of the invention, the network-enabled device identifying information may be a unique identifier of the network-enabled device and the step of registering the network-enabled device may comprise storing the unique identifier in a table of authorized devices that may establish a communications channel to the gateway device over the second communications protocol.

According to another aspect of the invention, that the network-enabled device identifying information may be a MAC address of the network-enabled device and the step of registering the network-enabled device may comprise setting up the MAC address to be allowed for establishing a communications channel to the gateway device over the second communications protocol.

According to another aspect of the invention, the network configuration parameter may be a key required by the gateway device to establish a communications channel over the second protocol. According to another aspect of the invention, the second protocol may be Wi-Fi and the key may be a Wired Equivalent Privacy (WEP) encryption key, a Wi-Fi Protected Access (WPA) password or a Wi-Fi Protected Access II (WPA2) password.

According to another aspect of the invention, the transmitting of the network configuration parameter may comprise digitally signing the message containing the network configuration parameter with a digital certificate of the network gateway device or encrypting the message containing the network configuration parameter.

According to another aspect of the invention, it may further comprise receiving parameters for establishing a virtual private network connection between the network-enabled device and the gateway device over the first communications channel; and operating the network-enabled device to set up and establishing a virtual private network connection to a remote VPN server via the gateway device over the second communications channel.

The invention also proposes a device for providing secure communication between a first device and a network gateway device. The device is characterized in that it comprises a device-interface module connectable to the first device; a short-range communications module operable to communicate according to a short-range pairing protocol; a network communications module operable to communicate according to a second communications protocol; a microprocessor connected to the device-interface module, the short-range communications module, and the network communications module; and a data storage module for storing instructions executable by the microprocessor, wherein the instructions includes instructions to cause the microprocessor to: establish a first communications channel to the network gateway device over a short-range pairing protocol via the short-range communications module; transmit - to the network gateway device over the first communications channel - identifying information of the network-enabled device wherein the identifying information is a parameter required by the network gateway device to establish the first device as eligible for communication with the gateway device on a second communications protocol; receive - from the network gateway device over the first communications channel - a network configuration parameter required by the network-enabled device to establish a connection to the gateway device over the second communications protocol; setup a network configuration based on the received network configuration parameter; and establish a second communications channel over the second communications protocol.

According to another aspect of the invention, the device-interface module may be operable to produce physical link connections on a protocol selected from the set having the members I2C, SPI, CAN, USB, and Ethernet.

### BRIEF DESCRIPTION OF THE DRAWINGS

Figure 1 is a block diagram illustrating a network topology in which a first device, here a networkable music player, uses a short-range communications channel in a set-up step to facilitate establishing a connection to a gateway over a networking protocol communications channel to thereby establish a secure network connection to the Internet.
Figure 2 is a block diagram illustrating a high-level view of the architecture of a networking enabler device (hereinafter, IP-Enabler) that provides Internet Protocol connection to other devices such as appliances.
Figures 3a - 3c are block diagrams illustrating different configurations of the IP-Enabler with devices to which the IP-Enabler may be connected.
Figure 4 is a block diagram illustrating a high-level view of the architecture of a microcontroller of the IP-Enabler of Figures 2 and 3a - 3c.
Figure 5 is a block diagram illustrating the architectural organization of programs over the hardware components of the microcontroller of Figure 4, including illustrating a device agent, a short-range communications module, and a network communications module.
Figure 6 is a timing sequence diagram illustrating the message flow between the device for which network connectivity is to be provided, the IP-Enabler and the network gateway device that provides a connection to a wider network, e.g., the Internet.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment of the invention, a secure, flexible and inexpensive mechanism is provided that brings near-automatic secure network connectivity to a variety of devices and appliances.

The description herein refers to many communications protocols, communications terms by abbreviation or short-hand name. The following provides a glossary and brief description of these protocols and related terminology:

### Protocols:

- 3G: 3G is the third generation of mobile phone systems. It is characterized, in part, by higher bandwidth than predecessor, for example, with broadband access of up to 2 Megabits/second. FCC, *3G Third Generation Wireless,* http://transition.fcc.gov/3G/, accessed on December 16, 2012
- 4G: 4G mobile broadband systems, fourth generation, are successors to the 3G wireless systems, and are characterized by yet higher speed for wireless service. Examples include LTE (Long Term Evoloution) standards. Wikipedia, 4G, http://en.wikipedia.org/wiki/4G, accessed on December 16,2012
- Bluetooth: Bluetooth is a wireless technology aimed at simplifying communications among Bluetooth devices. To create an initial connection, the devices *pair,* which may involve the exchange of a passkey. On future connections, a communications link is created automatically. Bluetooth.com, *Bluetooth,* www.bluetooth.com, accessed December 14, 2012.
- Bonjour: Bonjour is a version of zero-configuration networking over IP implemented by Apple, Inc. Apple Inc., *About Bonjour,* https://developer.apple.com/library/mac/#documentation/Cocoa/Conceptu al/NetServices/Articles/about.html#//apple_ref/doc/uid/TP40002458-SW1, accessed on December 15, 2012
- CAN: Controller Area Network bus. A rugged, digital serial bus used in industrial environments. CAN uses a broadcast model similar to Ethernet. PC Magazine, *CAN Bus,* http://www.pcmag.com/encyclopedia term/0,1237,t=CAN+bus&i=39243, 00.asp, accessed on December 14, 2012
- DNSSD: DNS Based Service Discovery is most widely known as one of the major components of Zeroconf networking. Zeroconf networking is a set of technologies that allow two or more computers to communicate with each other without any external configuration. Smaellegan.com, *DNS Based Service Discovery (DNSSD),* http://www.smallegan.com/blog/2005/06/09/dns-based-service-discovery-dnssd/, accessed December 14, 2012
- DNSSEC: Domain Name System Security Extensions (DNSSEC) is a suite of specifications for securing certain kinds of information provided by the Domain Name System as used on Internet Protocol networks. DNSSEC.NET, *DNSSEC: DNS Security Extensions Securing the Domain Name System,* www.dnssec.net, accessed on December 15, 2012.
- eGo: eGo Network Protocol is a communications protocol allowing communication to proceed through human skin contact. Gemalto, *Introducing eGo,* http://www.gemalto.com/ego/index.html, Accessed on December 16, 2012
- Ethernet: Ethernet is a family of computer networking technologies for local area networks (LANs). Ethernet is defined by IEEE 802.3. IEEE, *IEEE 802.3*™: *ETHERNET,* http://standards.ieee.org/about/get/802/802.3.html, accessed on December 15, 2012.
- 12C: The I2C (Inter-IC) bus is a bi-directional two-wire serialbus that provides a communication link between integrated circuits (ICs). Techtarget, *Definition I2C Bus* (*Inter-IC Bus),* http://searchcio-midmarket.techtarget.com/definition/I2C-bus, accessed December 14, 2012
- IP: Internet Protocol. It is a mechanism by which packets may be routed between computers on a network-of-networks. Defined by DARPA, RFC791. Defense Advance Research Projects Agency, *Internet Protocol, RFC791,* http://www.ietf.org/rfc/rfc791.txt, Accessed on December 16, 2012
- IPSEC: Internet Protocol Security (IPsec) is a protocol suite for securing Internet Protocol (IP) communications using cryptography. IPsec is most commonly used to provide a Virtual Private Network (VPN). S. Frankel, IP Security (IPsec) and Internet Key Exchange (IKE) Document Roadmap, IETF (2/2011), http://tools.ietf.org/pdf/rfc6071.pdf, retrieved on December 15, 2012
- M-DNS: Multicast DNS - a joint effort by participants of the IETF zero Configuration and DNS Extensions working groups - is a way of using familiar DNS programming interfaces, packet formats and operating semantics, in a small network where no conventional DNS server has been installed. Multicastdns.org, *Multicast DNS,* http://www.multicastdns.org/, accessed on December 15, 2012
- NFC: Near Field Communication (NFC) is a short-range wireless technology that enables the communication between devices over a distance of less than 10 cm. The NFC standard is defined in ISO/IEC 18092. Gemalto, *NFC Definition,* gemalto, http://www.gemalto.com/nfc/definition.html, December 14, 2012
- SPI: Serial Peripheral Interface is a full-duplex synchronous serial interface connecting low and medium bandwidth extrernal devices. Webopedia, *SPI,* http://www.webopedia.com/TERM/S/SPI.html, accessed on December 14 2012
- TLS/SSL: TLS and SSL are most widely recognized as the protocols that provide secure HTTP (HTTPS) for Internet transactions between Web browsers and Web servers. Microsoft, *What is TLSlSSL?,* http://technet.microsoft.com/en-us/library/cc784450(v=ws.10).aspx, accessed December 14, 2012
- UART: A UART (Universal Asynchronous Receiver/Transmitter) is the electronic circuits that convert between parallel bytes of a CPU into serial bits on USB bus. PC Magazine, *UART,* http://www.pcmag.com/encyclopedia_term/0,1237,t=UART&i=53327,00. asp, accessed on December 16, 2012
- USB: Universal Serial Bus, an external bus standard for connecting peripheral devices to computers. PC Magazine, *USB,* http://www.pcmag.com/encyclopedia_term/0,1237,t=USB&i=53531,00.as p, Accessed on December 16, 2012
- UWB: Ultra-Wideband (UWB) is a communications technology that employs a wide bandwidth (typically defined as greater than 20% of the center frequency or 500MHz). UWB is usually used in short-range wireless applications but can be sent over wires. Ultra-Wideband carry high data rates with low power and are primarily used for short-range indoor communications. Track It Systems, *UWB,* http://www.thetrackit.com/library/UWB%20Defin.pdf, Accessed December 14, 2012
- WiFi: Wi-Fi is a networking technology that uses radio waves to provide wireless high-speed connections defined by IEEE 802.11. Wi-Fi Alliance, *Discover and Learn,* https://www.wi-fi.org/discover-and-learn, accessed on December 14, 2012
- ZigBee: Zigbee is a standard-based (IEEE 802.15.4) wireless technology targeted at low-cost, low-power wireless sensor and control networks. ZibBee Alliance, *ZigBee Technology,* http://www.zigbee.org/About/AboutTechnology/ZigBeeTechnology.asp, accessed on December 15, 2012

### Other Communications Terms:

- WEP: Wired Equivalent Privacy, an IEEE standard (802.11b) designed to provide security on wireless networks using preshared keys. PC Magazine, *WEP*, PC Magazine, http://www.pcmag.com/encyclopedia_term/0,1237,t=WEP&i=54412,00. asp, Accessed on December 16, 2012
- WPA: Wi-Fi Protected Access a Wi-Fi standard that was designed to improve upon the security features of WEP and is defined by IEEE 802.111. PC Magazine, *WPA*, http://www.pcmag.com/ encyclopedia_term/0,1237,t=WPA&i=54879,00.asp, accessed on December 16, 2012

### Integrated Circuit Packaging:

- BGA: Ball grid array is a surface mount technology that is made up of grid of solder ball connectors. BGA has a high lead count. PC Magazine, *BGA*, http://www.pcmag.com/encyclopedia_term/0%2C1237%2Ct%3DBGA&i%3D38577%2C00.asp, accessed on December 16, 2012
- DIP: Dual In-line Package is a common rectangular form for an integrated circuit chip having leads along both long sides. PC Magazine, DIP, http://www.pcmag.com/encyclopedia_term/0,1237,t=dual+in-line+package&i=41417,00.asp, accessed on December 16, 2012
- LGA: Land Grid Array is a surface-mount packaging for integrated circuits with a high density of contact pads that make touch-contact to contacts on a motherboard socket. PC Magazine, *LGA,* http://www.pcmag.com/encyclopedia term/0%2C1237%2Ct%3DLGA&i %3D60329%2C00,asp, accessed on December 16, 2012.
- QFN: The Quad Flat No-Lead package is an integrated circuit package in the form of quad flat pack with "no-leads". Electrical contact is made by soldering contacts to lands underneath package body. Agilent Technologies, *Quad Flat No-Lead (QFN) Application Note and Best Practices,* http://www.home.agilent.com/upload/cmc_upload/All/QuadFlatNoLead QFNApplicationNoteandBestPractices.pdf?&cc=US&lc=eng, accessed on December 16, 2012

### Security Devices:

- SIM: Subscriber Identity Module. A removable smart card used in GSM
- 3FF: cellphones, smartphones and tables as weal UMTS phones. The SIM card is used to store unique subscriber ID and authentication codes and may be used for services such as cryptography. 3FF is a small form-factor SIM card. PC Magazine, *SIM Card,* http://www.pcmag.com/encyclopedia term/0,1237,t=SIM+card&i=6174 5,00.asp, accessed on December 16, 2012
- µSD: microSD is an extra-small Secure Digital (SD) flash memory card.
- microSD: Secure Digital or (SD) is a flash memory card used in portable devices. PC Magazine, *SD Card,*
- SD Card: http://www.pcmag.com/encyclopedia term/0,1237,t=SD+Card&i=50962 ,00.asp, accessed on December 16, 2012

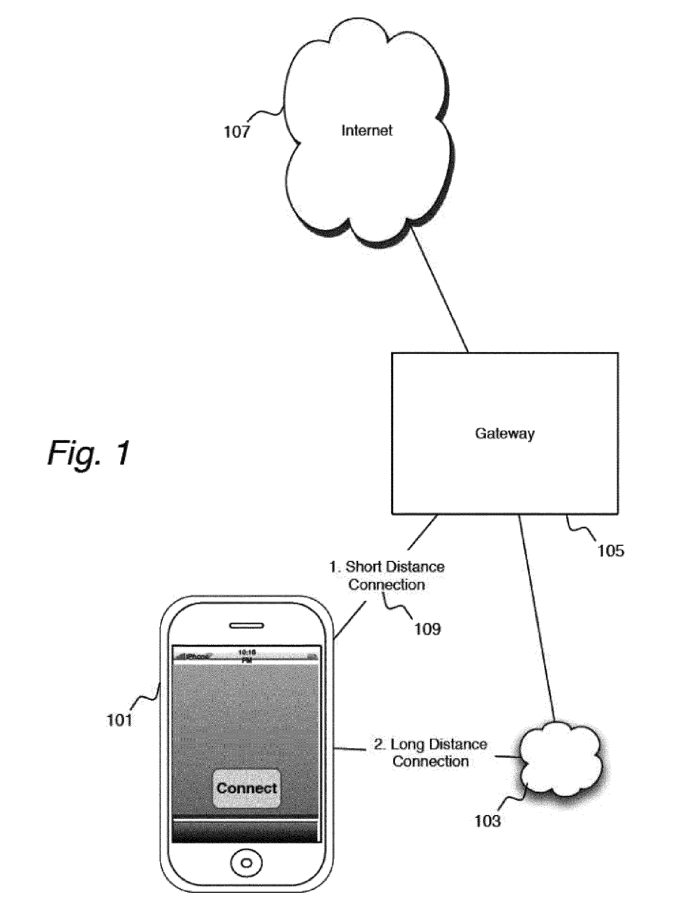

Figure 1 is a block diagram illustrating a network topology in which a first device, here a networkable music player 101, uses a short-range communications channel in a set-up step to facilitate establishing a connection to a gateway over a network communications channel to thereby establish a secure network connection to the Internet. Consider as an example, an owner of a networkable music player 101, e.g., an iPod Touch from Apple Inc., Cupertino, California, that wishes to use a voice-over-IP telephone application on the networkable music player 101 when he arrives at a secure network 103 established by a gateway 105. He sees that there is a WiFi network available, however, he has no idea of how to connect to the network 103. Typically, an administrator of the gateway 105 that establishes the WiFi connection must supply the owner of the networkable music player 101 with a password of some sort, e.g., a WEP key. The gateway 105 may require additional network parameters. Furthermore, there may be filtering set up on the gateway 105 so that only particular devices 101, for example, identified by MAC address, may connect to the gateway 105 and use it as a connection to the Internet 107.

Traditionally, the user of the device 101 would have to enter that password manually on the networkable music player 101 and the administrator would have to enter the MAC address of the networkable music player 101 manually in a web-browser interface provided by the Gateway 105.

In an embodiment of the technology described herein below, the device 101 is provisioned with a networking enabler device, referred to herein as IP-Enabler. Being provisioned with the IP-Enabler, the device 101 may establish a short-range communications channel 109 to the gateway device. The short-range communications channel is in the form of a *pairing* protocol.

*A pairing* protocol is a protocol in which two devices that may communicate over the pairing protocol establish a connection between two devices, for example, a computer and a peripheral input device, without much formality. When the pairing protocol is enabled on the computer, the computer and the peripheral device "find" each other and connect automatically if they have been previously paired. In the first use, in one example, the devices are trivially paired by merely selecting the keyboard from a menu on the computer and entering a pairing code on the keyboard. After the pairing, the peripheral device and computer are linked over the pairing-protocol communications link allowing the user to use the peripheral device with the computer.

Other pairing protocols include Near Field Communication (NFC). NFC is a set of standards that provide radio communication between devices based on the devices touching each other or being placed very close to one another, e.g., within a few centimeters. NFC is, for example, becoming popular in contactless payment systems. A user may store payment information on an NFC-enabled device. By touching the device to an NFC payment-terminal, a payment may be made. When the two devices have been placed in contact a communications channel establishes automatically allowing for transactions to take place over the communications channel.

In Figure 1, using NFC as an example, the device 101 may be touched to the gateway 105, or a proxy for the gateway, e.g., an NFC-terminal connected to the gateway 105. The gateway 105 and the device 101 detect that the other is an NFC-enabled device and attempt to establish an NFC communications channel 109. Upon establishing the communications channel, the gateway 105 may engage in a dialog with the device 101 to determine if the device 101 (or more accurately, the owner of the device 101) desires a connection to the network 103 that is controlled by the gateway 105. If that is the case, the gateway 105 transmits the necessary networking parameters to the device 101 and obtains from the device 101 any identifying information, e.g., MAC address that the gateway 105 requires. The device 101 accepts the networking parameters and creates a networking configuration based on the parameters while the gateway 105 enters the identifying information into a list of allowed devices. The device 101 uses the networking configuration to connect to the network 103 and the gateway 105 allows the connection.

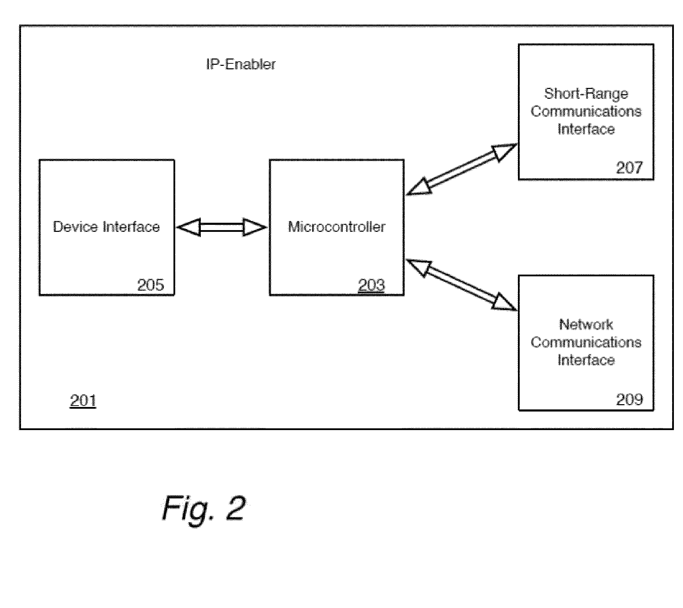

In one embodiment, the above scenario is facilitated by a module, known as the IP-Enabler 201 that may be incorporated into other devices 101 to provide the connectivity on the short-range communications channel and the network communications channel. Figure 2 is a block diagram illustrating a high-level view of the architecture of the IP-Enabler 201 that provides Internet Protocol connection to other devices 101 such as appliances.

In one embodiment, the IP enabler 201 is a tamper-proof electronic component that has a microcontroller 203, a device interface 205, and short-range communications interface 207, and a network communications interface 209.

The network communications interface 209 provides a communications interface for the IP-Enabler 201 to allow it to communicate with an external network, e.g., network 103 established by a gateway device 105 and via it to a wider network such as the Internet 107. Examples of network protocols over which the network communications interface 209 may make connections include connected protocols such as Ethernet and USB, and wireless protocols such as WiFi, UWB, ZigBee, 3G, and 4G.

The short-range communications interface 207 is used by the IP-Enabler 201 to easily pair devices to securely join the IP-Enabler network 103 and to exchange configuration information, such as networking parameters and passwords, and device identifiers. Example technologies include NFC and eGo. eGo is a technology by which a communications link is established through a user's body, it is also referred to as a body-coupling communications protocol. A person holds onto the device 101 and touches the gateway 105 or a proxy for the gateway 105 to establish the eGo connection.

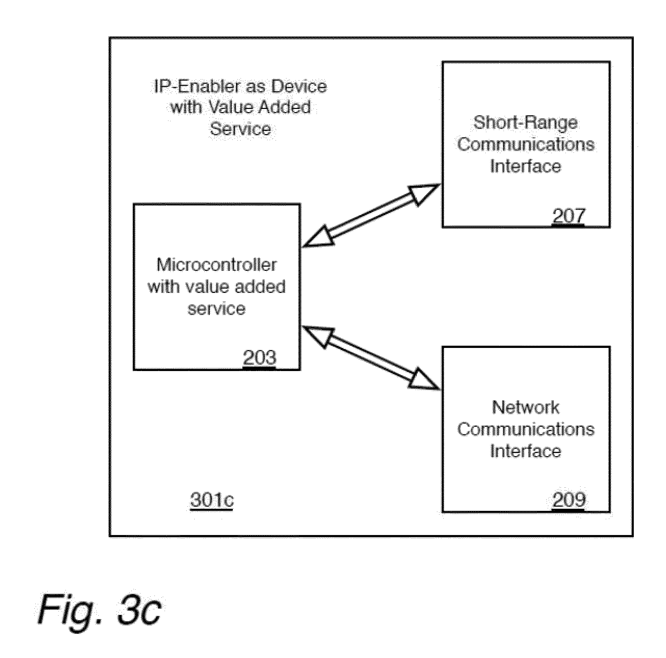

The device interface 205 is the communications link between the IP-Enabler 201 and the device 101, which seeks network connectivity 103. SPI, I2C, CAN, UART, USB, and Bluetooth are example protocols that may be used for the device interface 205. As discussed herein below in conjunction with Figure 3c, the IP-Enabler 201 (there as IP-Enabler device 301c) may exist as a stand-alone unit that provides unique value-added services while obtaining network connectivity 103 as described herein. In such embodiments, the device interface 205 would not be employed. Accordingly, the device interface 205 is optional.

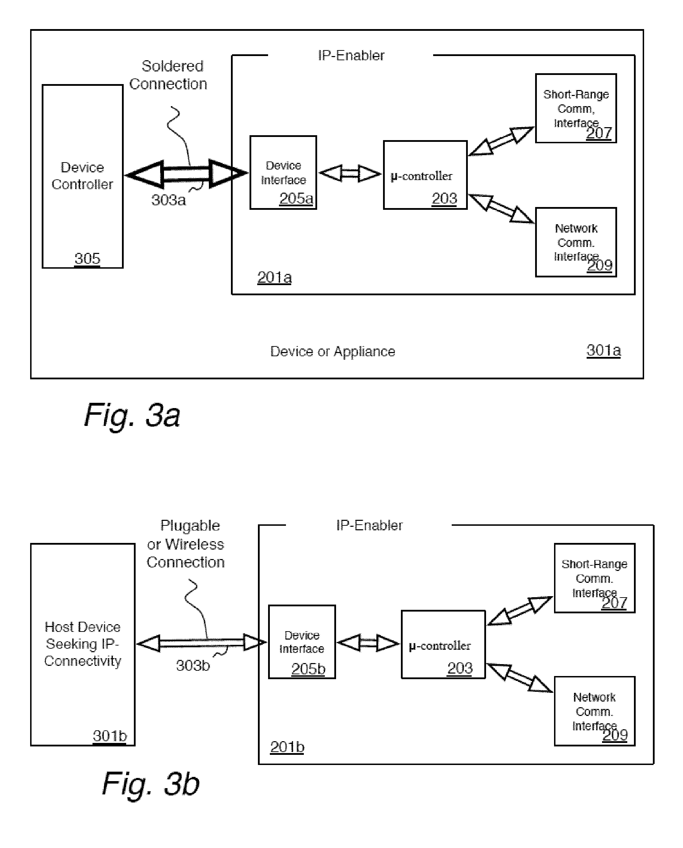

The IP-Enabler module 201 may be incorporated into many different form factors. Figures 3a - 3c are block diagrams illustrating different configurations of the IP-Enabler 201 with devices 301a, 301b or 301c to which the IP-Enabler 201 may be connected.

Figure 3a is a high-level illustration of an embodiment using the IP-Enabler 201a integrated into a device or an appliance 301a. The IP-Enabler 201a is an integrated circuit chip with a soldered connection 303a to the parent device 301a, for example, connecting a physical interface of the device interface 205a to a device controller 305 or to another module of the device or appliance 301a. Possible chip formats for the IP-Enabler 201a in this embodiment are DIP, BGA, LGA or QFN.

Figure 3b is a high-level illustration of an embodiment using the IP-Enabler 201b as a separate device from the device or an appliance 301b that seeks network connectivity 103. In this embodiment, the IP-Enabler 201b may be physically plugged into the host device 301b or connected wirelessly to the host device 301b through a plug-in or wireless connection 303b. Example form factors include USB token, smart badge holders, and µSD cards.

Figure 3c is a high-level illustration of an embodiment wherein the IP-Enabler device 301c is a standalone device that provides a service of its own and obtains network connectivity 103 as described herein. Example form factors include Smart Cards, SIM, 3FF, and other smart card form factors, as well as, µSD and USB token.

The interfaces 205, 207, and 209 are a mix of electronic circuitry for data communication and software for controlling the interface hardware to communicate according to specified protocols. Similarly, the microcontroller 203 is hardware programmed to perform particular tasks associated with the IP-Enabler device 301c functionality.

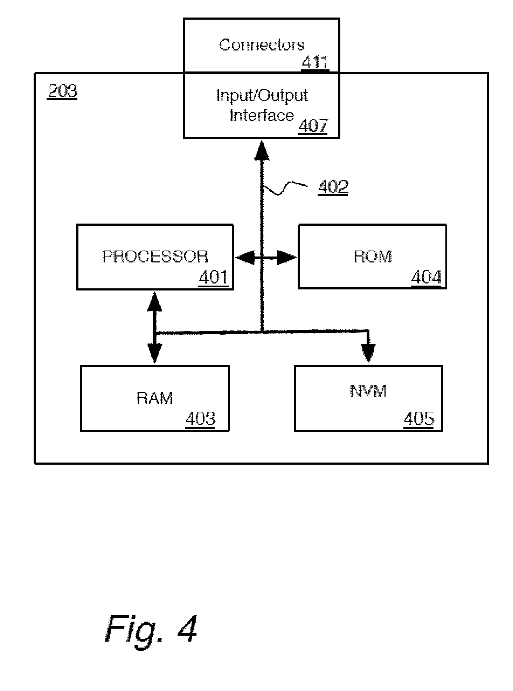

Figure 4 is a schematic illustration of a microcontroller 203. The microcontroller 203 may include a processor 401 connected via a bus 402 to a random access memory (RAM) 403, a read-only memory (ROM) 404, and a non-volatile memory (NVM) 405. The microcontroller 203 further includes an input/output interface 407 for connecting the processor 401, again typically via the bus 402, to connectors 411 by which the microcontroller 203 may be connected to other components of the IP-Enabler 201.

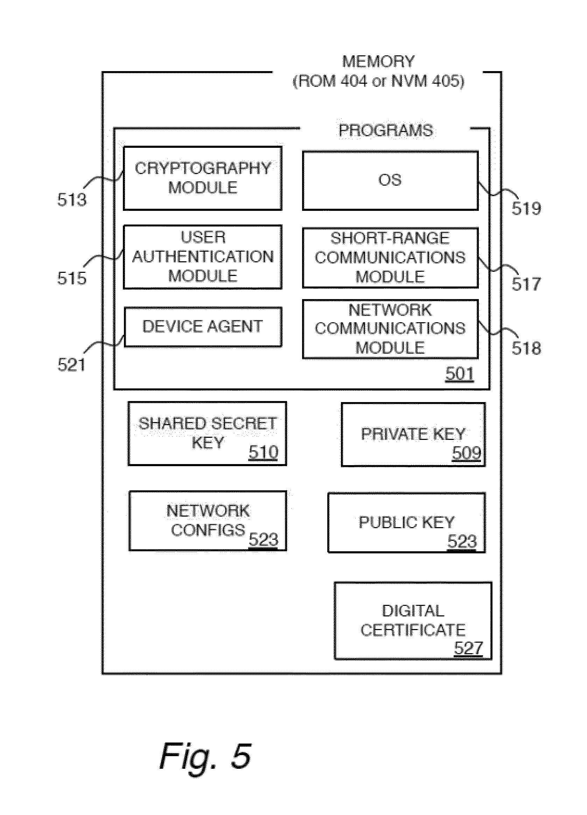

The NVM 405 and/or ROM 404 may include computer programs 501 as is illustrated in Figure 5. While it is here depicted that the computer programs 501 are all co-located in the ROM 404 or the NVM 405, in actual practice there is no such restriction as programs may be spread out over multiple memories and even temporarily installed in RAM 403. Furthermore, the microcontroller 203 may include multiple ROMs 404 or NVMs 405. The programs 501 include operating system programs as well as application programs loaded onto the microcontroller 203. The NVM 405 or ROM 404 may also contain other data, such as a public key 525, a private key 509, a shared secret key 510 or digital certificate 527. The NVM 405 may also store network configurations 523 established by using the IP-Enabler 201 to obtain networking parameters as described herein.

The microcontroller 203 programs 501 may include a cryptography module 513, a user authentication module 515, and the operating system OS 519.

While the illustrations of Figures 2 and 3 provide for distinct blocks for the microcontroller 203, the short-range communications interface 207, the network communications interface 209, and device interface 205, in some embodiments, these interfaces are controlled by the microcontroller 203 according to software modules loaded thereon. Thus, the programs 501 may include a short-range communications module 517 for controlling the short-range communications interface 207, a network communications module 518 for controlling the network communications interface 209, and a device agent 521 for interactions with the device 301 over the device interface 205.

To provide secure network connectivity, for example, over IP, the microcontroller 203, in conjunction with the interface devices 205, 207, and 209, provide for secure network connections over a secure communications protocol such as TLS/SSL, which has the ability to securely resolve domain names, for example, with DNSSEC, and to create secure virtual private networks through a protocol such as IPSEC.

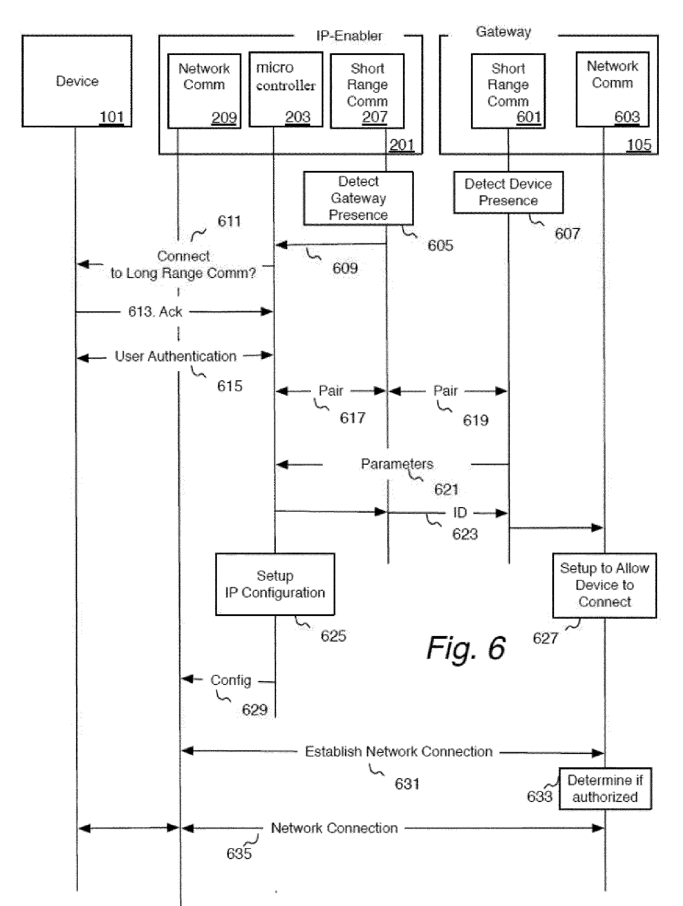

Figure 6 is a timing sequence diagram illustrating the message flow between the device 101 for which network connectivity is to be provided, the IP-Enabler 201 and the network gateway device 105 that provides a connection to a wider network, e.g., the Internet. Like the IP-Enabler 201, the gateway 105 contains mechanisms for short-range communication 601, e.g., NFC or intra-body communication, and for network communication 603.

When a user of the device 101 approaches or touches the gateway 105 both the gateway 105 (via the short-range communication mechanism 601) and the IP-Enabler 201 (via the short-range communications mechanism 207) detect the other's presence on the short-range channel, steps 605 and 607. In one embodiment, this is taken as an implicit authorization by the user to connect a short-range channel 109 to the gateway to obtain networking parameters. Alternatively, a query on whether the user desires to establish the connection may be transmitted to a user-interface of the device 101, via the device interface 205 (not shown in Figure 6), steps 609 and 611. The device 101 responds with an acknowledgement, step 613, (for this discussion we assume the acknowledgement is indicative of a desire to establish the network connection 103 as the negative is merely to terminate the process).

In another optional step 615, a user authentication may be executed between the device 101 and the microcontroller 203 to obtain a higher level of confidence that an authorized user of the device 101 is attempting to establish the network connection 103. User authentication, step 615, may be through usemame-password, PIN, entry of a specific pattern on a touch-screen device of the device 101, a biometric such as fingerprint, voiceprint or face recognition.

Having, optionally, obtained the user's explicit acquiescence to establishment of the network connection 103 and, optionally, the authentication of the user, step 615, the microcontroller 203 pairs the IP-Enabler 201 to the gateway 105 via the short-range communications interface 207, steps 617 and 619.

When the pairing steps, 617 and 619, have established a short-range protocol communication channel, the gateway 105 transmits network parameters 621, to the IP-Enabler 201. These network parameters 621 may include WEP/WPA key for the wider network 103, cryptography keys and any other security settings required by the gateway 105 to allow and enable a device 101 to operate on the network 103. In an alternative embodiment, the network parameters are digitally signed using a certificate of a third-party trusted by the IP-enabler 201. Alternatively, or additionally, the network parameters may be encrypted prior to being transmitted to the IP-Enabler 201.

The IP-Enabler 201, conversely, transmits, step 623, on the short-range communications channel identifying information (ID) for the device 101, e.g., a MAC address. In an alternative embodiment, the identifying information (ID) is digitally signed using a certificate of a third-party trusted by the gateway 105. Alternatively, or additionally, the identifying information (ID) may be encrypted prior to being transmitted to the IP-Enabler 201.

The microcontroller 203 of the IP-Enabler 201 builds a network configuration based on the received parameters, step 625.

The gateway 105 adds the identifier of the device 101 to any filters, e.g., MAC filter, used by the gateway 105 to list devices authorized to connect to the network 103, step 627.

Thus, after the execution of steps 625 and 627, the required network configuration allowing the device 101 to connect to the network 103 using the IP-Enabler 201 has been generated from the parameters received from the gateway 105 over the short-range communications channel. The device 101 has automatically been configured for network connectivity. Similarly, the gateway 105 has been automatically configured to allow the device 101 to connect to the network 103.

With the network configuration in place for the network 103, the IP-Enabler 201 establishes a network connection over the network communication interface 209 to the network communication interface 603 of the gateway 105, steps 629 and 631. If the gateway 105 determines that the device 101 is allowed to make the connection, step 633, a network connection is created between the device 101 and the gateway 105, step 635.

A particularly tricky communications protocol to configure is the establishment of a virtual private network, for example, over IPSEC. Such configurations require agreement on encryption protocols, network subsets, DNS address for the VPN server, as well as shared secrets. The mechanism herein is therefore quite useful in setting up VPN configurations. In the VPN example, the gateway 105 takes the role of a VPN server to which a device 101 seeks to establish a VPN tunnel. Thus, step 621 would entail transmission of VPN configuration parameters, and steps 625 and 627 (optionally) would entail producing a VPN configuration and setting up the VPN server to accept VPN tunnel requests from the device 101.

A device 101, in the VPN case, for example, a computer, having an IP-enabler 201 functionality may be configured through the short-range protocol via short-range communications interfaces 207 and 601 on the device 101 and on the gateway (VPN server) 105, respectively, as described herein above. VPN is usually used to produce a secure network connection from a remote location. Thus, use of the VPN embodiment would typically entail moving the device 101 to a remote location, for example, to a home office or while traveling. The VPN configuration may then be used to establish a VPN tunnel to the gateway/VPN server 105.

From the foregoing it will be apparent that a seamless, flexible, and secure mechanism has been described that facilitates connecting devices over secure network connections by transferring networking parameters and related information over a short-range channel established by placing a device very near or touching a gateway device.

Although specific embodiments of the invention have been described and illustrated, the invention is not to be limited to the specific forms or arrangements of parts so described and illustrated. The invention is limited only by the claims.

## Claims

1. A method for establishing a communications channel between a network-enabled device and a network gateway device, **characterized in that** the method comprises
establishing a first communications channel between the network-enabled device and the network gateway device over a short-range pairing protocol;
operating the gateway device:
to transmit a network configuration parameter from the gateway device to the network-enabled device on the first communications channel, wherein the network configuration parameter is a connection parameter required for connecting to the gateway over a second communications protocol;
operating the network-enabled device:
to setup a network configuration based on the received network configuration parameter; and
to use the network configuration to establish a second communications channel over the second communications protocol.

2. The method of Claim 1 **characterized in that** the short-range pairing protocol is a body-coupling communications protocol and the step of establishing a first communications channel comprises recognizing that a user simultaneously touches the network-enabled device and the gateway device or a proxy for the gateway device.

3. The method of Claim 1 **characterized in that** the short-range pairing protocol is near-field communication and establishing a first communications channel comprises detecting that a user carrying the network-enabled device has approached the gateway device or a proxy for the gateway device.

4. The method of Claim 1 **characterized in that** the short-range pairing protocol is over an optical link and establishing a first communications channel comprises detecting that a user carrying the network-enabled device is transmitting optical signals on an optical wavelength commensurate with an optical wavelength the gateway device or a proxy for the gateway device supports for data communication.

5. The method of Claim 4 **characterized in that** the optical link is over an Infrared (IR) communications channel.

6. The method of Claim 1 **characterized in that** it further comprises :
upon successfully establishing the first communications channel transmitting - from the network-enabled device to the network gateway device on the first communications channel - a parameter of the network-enabled device required by the network gateway device to establish the network-enabled device as eligible for communication with the gateway device on a second communications protocol; and
operating the gateway device:
to receive the parameter of the network-enabled device on the first communications channel, and to use the parameter to register the network-enabled device for communication to the network via the gateway device.

7. The method of Claim 6 **characterized in that** the parameter is an identifier of the network-enabled device.

8. The method of Claim 7 **characterized in that** the identifier is a MAC address and wherein the gateway device is operated to perform MAC filtering based on the MAC address received over the first communications channel.

9. The method of Claim 1 **characterized in that** the establishing of a communications channel comprises authenticating a user on the network-enabled device as a user that is authorized to use the first communications channel to establish a second communications channel over the second communications protocol.

10. The method of Claim 9 **characterized in that** the authentication is performed by requiring the user to enter a PIN, a password, or entering a prescribed pattern on a touchscreen.

11. The method of Claim 9 **characterized in that** the network-enabled device comprises a biometric sensor and wherein the authentication comprises verifying the identity of an authorized user of the network-enabled device based on a reading of biometric data on the biometric sensor.

12. The method of Claim 9 **characterized in that** the network-enabled device comprises a camera and wherein the step of authenticating the user comprises verifying the identity of an authorized user of the network-enabled device based on face recognition, or wherein the network-enabled device comprises a voice detector and the step of authenticating the user comprises recognizing a voice print of the user.

13. The method of Claim 1 **characterized in that** the network-enabled device identifying information is selected from the set MAC address of the network-enabled device, a public key of the network-enabled device, a secret of the network-enabled device usable as a shared secret key with the gateway device, a private key and a digital certificate of the network-enabled device confirming the identity of the network-enabled device.

14. The method of Claim 1 **characterized in that** the step of transmitting the network-enabled device identifying information comprises digitally signing the message containing the network-enabled-device identifying information with a digital certificate associated with the network-enabled device or encrypting the message containing the network-enabled-device identifying information.

15. The method of Claim 1 **characterized in that** the network-enabled device identifying information is a unique identifier of the network-enabled device and the step of registering the network-enabled device comprises storing the unique identifier in a table of authorized devices that may establish a communications channel to the gateway device over the second communications protocol.

16. The method of Claim 15 **characterized in that** the network-enabled device identifying information is a MAC address of the network-enabled device and the step of registering the network-enabled device comprises setting up the MAC address to be allowed for establishing a communications channel to the gateway device over the second communications protocol.

17. The method of Claim 1 **characterized in that** the network configuration parameter is a key required by the gateway device to establish a communications channel over the second protocol.

18. The method of Claim 17 **characterized in that** the second protocol is Wi-Fi and the key is a Wired Equivalent Privacy (WEP) encryption key, a Wi-Fi Protected Access (WPA) password or a Wi-Fi Protected Access II (WPA2) password.

19. The method of Claim 1 **characterized in that** the transmitting of the network configuration parameter comprises digitally signing the message containing the network configuration parameter with a digital certificate of the network gateway device or encrypting the message containing the network configuration parameter.

20. The method of Claim 1 **characterized in that** it further comprises
receiving parameters for establishing a virtual private network connection between the network-enabled device and the gateway device over the first communications channel; and
operating the network-enabled device to set up and establishing a virtual private network connection to a remote VPN server via the gateway device over the second communications channel.

21. A device for providing secure communication between a first device and a network gateway device, **characterized in that** it comprises
a device-interface module connectable to the first device;
a short-range communications module operable to communicate according to a short-range pairing protocol;
a network communications module operable to communicate according to a second communications protocol;
a microprocessor connected to the device-interface module, the short-range communications module, and the network communications module; and
a data storage module for storing instructions executable by the microprocessor, wherein the instructions includes instructions to cause the microprocessor to:
establish a first communications channel to the network gateway device over a short-range pairing protocol via the short-range communications module;
transmit - to the network gateway device over the first communications channel - identifying information of the network-enabled device wherein the identifying information is a parameter required by the network gateway device to establish the first device as eligible for communication with the gateway device on a second communications protocol;
receive - from the network gateway device over the first communications channel - a network configuration parameter required by the network-enabled device to establish a connection to the gateway device over the second communications protocol;
setup a network configuration based on the received network configuration parameter; and
establish a second communications channel over the second communications protocol.

22. The device of Claim 21 **characterized in that** the device-interface module is operable to produce physical link connections on a protocol selected from the set having the members I2C, SPI, CAN, USB, and Ethernet.
